(19) Europäisches Patentamt
European Patent Office
Office européen des brevets

(11) **EP 4 092 578 A1**

(12) **EUROPEAN PATENT APPLICATION**

(43) Date of publication:
**23.11.2022 Bulletin 2022/47**

(21) Application number: **21174394.3**

(22) Date of filing: **18.05.2021**

(51) International Patent Classification (IPC):
**G06N 3/04** *(2006.01)*    **G06N 3/10** *(2006.01)*
**G06F 7/483** *(2006.01)*    **G06F 7/556** *(2006.01)*

(52) Cooperative Patent Classification (CPC):
**G06N 3/10; G06F 7/483; G06F 7/556; G06N 3/0481**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Aptiv Technologies Limited**
**St. Michael (BB)**

(72) Inventor: **PETIG, Christof**
**42359 Wuppertal (DE)**

(74) Representative: **Vigand, Philippe et al**
**Novagraaf International SA**
**Chemin de l'Echo 3**
**1213 Onex - Genève (CH)**

(54) **COMPUTER-IMPLEMENTED METHOD OF EXECUTING SOFTMAX**

(57)    The method includes

i) pre-storing (S10) M fraction components $fc_j$ in binary form, derived from the expression $2^{\left(\frac{j}{M}\right)}$, forming a lookup table (T) of size M;

ii) for each input number $z_i$, calculating (S14) an element $y_i$ of a number of the form $2^{y_i}$ where $y_i = \frac{z_i}{ln(2)}$;

iii) separates (S15) $y_i$ into an integral part $int_i$ and a fractional part $fract_i$;

v) retrieving (S17) the fraction component $fc_i$ from the lookup table (T) based on

vi) generates, in a result register ($R6_i$), a binary number $q_i$ representative of the exponential value of said input number $z_i$, by combining $fc_i$ and $int_i$;

v) adds the K result registers ($R6_i$) into a sum register (R7);

vi) determines the K probability values $p_i$ from the K result registers ($R6_i$) and the sum register (R7).

FIG. 2

**Description**

TECHNICAL FIELD

The present disclosure relates to a computer-implemented method for computing a SoftMax function on a data processing device.

BACKGROUND

A SoftMax function takes as input a vector $z$ of $K$ real numbers $z_i$ with $i$ = 1, ...,$K$ and can bedefined by the following mathematical formula:

$$\sigma(z)_i = \frac{e^{z_i}}{\sum_{j=1}^{K} e^{z_j}} \text{ for } i = 1, \dots, K \text{ and } z = (z_1, \dots, z_K) \in \mathbb{R}^K$$

The SoftMax function normalizes the vector $z$ into a probability distribution consisting in $K$ probabilities proportional to the exponentials of the input numbers. After applying the SoftMax function, each component is in the interval (0,1) and the components add up to 1.

Such a function can be used for example as the last activation function of a neural network, for example a classification neural network, to normalize the output of the neural network to a probability distribution over predicted output classes.

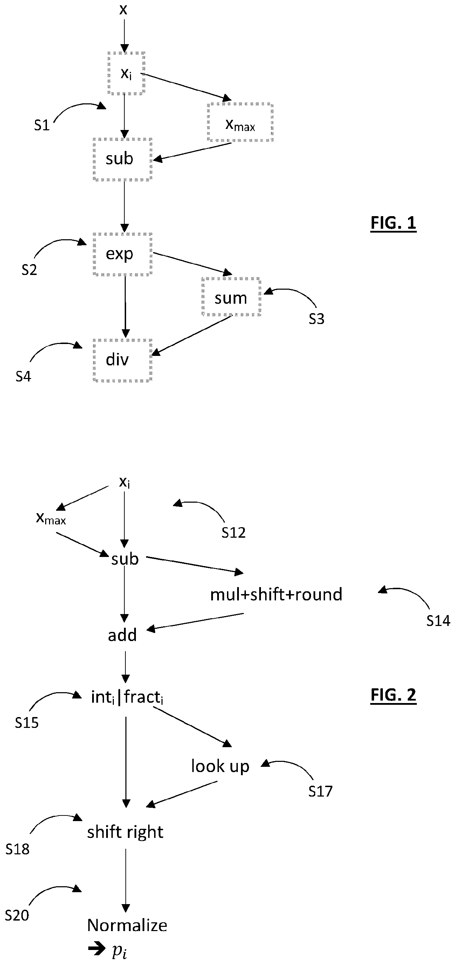

Let's consider a classification neural network for recognition of cats and dogs. With reference to figure 1, the neural network is fed in input with an image and outputs a vector x that includes for example 2.5 for a cat and 0.5 for a dog and 1.5 for unknown. In a step S1, the SoftMax function running on a processor first subtracts the maximal input value 2.5 to turn the original input values 2.5, 0.5 and 1.5 into new input values 0, -2, -1 that are either negative or zero. Then, the SoftMax function calculates the exponentials of the input values exp(0), exp(-2), exp(-1) in a step S2, adds the exponentials in a step S3, and normalizes the output in a step S4, by dividing each exponential by the sum of the exponentials, to obtain output values between 0 and 1 that add up to 1. This output values provide a distribution of probabilities. In the given illustrative example, the distribution of probabilities includes 56% for a cat, 11% for a dog and 33% for unknown.

The SoftMax function makes a non-linear mapping: the most probable outcomes are amplified and the less probable outcomes (non-meaningful) are significantly reduced or even suppressed. The sum of the probabilities (percentages) of the different classes is 100%. Such a non-linear mapping is done using the exponential function. The output of the neural network is quite evenly distributed. Its decision may be unclear. The SoftMax function allows to amplify the output components by an exponential function and the result is normalized to one.

To execute the SoftMax function, the processor needs to calculate an exponential function, which is very costly in computing resources. The processor uses floating-point operations represented by dotted boxes in figure 1. It takes a lot of computing cycles, run time and energy. Furthermore, in a microcontroller, with more limited capacities than other processors, floating-point numbers are avoided because they involve a higher energy consumption and a higher demand on processor resources.

Therefore, there is a need to reduce the cost in computing resources when the SoftMax function runs on a processor or a data processing device.

SUMMARY

The present disclosure concerns a computer-implemented method of executing a SoftMax function on K input number $z_i$, with $1 \leq i \leq K$, carried out by a data processing device (100) including the computation, for each input number $z_i$, of a probability value $p_i$ that is equal to the exponential value of said input number $z_i$ divided by a sum $\Sigma$ of the exponential values of the K input number $z_i$,
characterized in that the data processing device:

i) pre-stores in memory M fraction components $fc_j$ in binary form, derived from the expression $2^{\left(\frac{j}{M}\right)}$ where j is an integer varying from 0 to M-1, said M fraction components forming a lookup table of size M;

ii) for each input number $z_i$, calculates an element $y_i$ of a number of the form $2^{y_i}$ where $y_i$ represents $\frac{z_i}{ln(2)}$,

iii) separates the element $y_i$ into an integral part $int_i$ and a fractional part $fract_i$;

iv) determines a lookup index $ind_i$ that corresponds to the fractional part $fract_i$ scaled by the size M;

v) retrieves the fraction component $fc_j$ from the lookup table with the obtained lookup index $indi$ ;

vi) generates, in a result register, a binary number $q_i$ representative of the exponential value of said input number $z_i$, by combining said fraction component $fc_j$ retrieved from the lookup table and said integral part $int_i$;

v) adds the K result registers corresponding to the K input numbers $z_i$ into a sum register R7;

vi) determines the K probability values $p_i$ from the K result registers and the sum register.

In the present disclosure, the calculation by the exponential function is avoided. The exponentiation is turned into an exponentiation of 2 and a lookup table storing binary fraction components $fc_j$ derived from the expression $2^{\left(\frac{j}{M}\right)}$ is used, which allows to simplify the operations and calculations within binary registers in the data processing device. The cost in computing resources to implement the SoftMax function is significantly reduced.

In an embodiment, the method further includes a preliminary step of computing the M fraction components $fc_j$ of the lookup table, with j varying from 0 to M-1, by using the following formula

$$fc_j = a * 2^{\left(b*\left(\frac{j}{M}\right)+c\right)} - d,$$

where

a, b, c and d are constant parameters;

b is either 1 or -1,

a includes an output scaling factor $S_{out}$, where $S_{out}$ is equal to $2^B$ and B is a number of desired bits for the computed exponential values,

d is a multiple of a;

wherein the parameters a, b, c and d for computing the fraction components $fc_j$ are adjusted in a way that the largest fraction component is equal or close to $2^B-1$.

Advantageously, each input number $z_i$ in binary form is scaled by an input scaling factor $S_{in}=2^\sigma$ so as to be stored in a first N-bit register;

wherein the input scaling factor $S_{in}$ is determined depending on the expected smallest and largest values of the numbers $z_i$ and the size N of the first N-bit registers.

In an embodiment, the step ii) of calculating each element $y_i$, with $y_i = \frac{z_i}{ln(2)}$, is carried out by the data processing device, and includes the following steps :

providing the corresponding scaled input number $z_i$ in the first N-bit register; right shifting the scaled input number $z_i$ by N/2-1 and processing the right shifted scaled input number $z_i$ according to the following processing rules to provide a transformed input number $z_i''$ into a second N/2-bit register,

- if the scaled input number $z_i$, after right shifting by N/2-1, does not overflow the second N/2-bit register, fitting the shifted scaled input number $z_i$ into said second N/2-bit register,
- if the scaled input number $z_i$, after right shifting by N/2-1, overflows the second N/2-bit register, saturating said second N/2 bit register;

providing the value of $\left(\frac{1}{ln(2)} - 1\right)$ scaled by $2^{N/2-1}$ in binary form in a third N/2-bit register;

calculating the product of the second and third N/2-bit registers and storing the product result into a fourth N-bit register,

adding the first N-bit register and the fourth N-bit register, by implementing a saturating addition, to obtain an element $y_i$, that is scaled by the input scaling factor $S_{in}$, in a fifth N-bit register.

Optionally, the step ii) of calculating each element $y_i$, further includes a step of rounding the right shifted scaled input number $z_i''$ by adding $2^{N/2-2}$ to the scaled input number $z_i$ before right shifting by N/2-1.

In an embodiment, the step ii) of calculating each element $y_i$, with $y_i = \dfrac{z_i}{ln(2)}$, is carried out by the data processing device, and includes the following steps :

>   providing the corresponding scaled input number $z_i$ in binary form in a first N-bit register;
>   right shifting the scaled input number $z_i$ in binary form by N/2-2 in a second N-bit register,
>   providing the value of $\dfrac{1}{ln(2)} - 1$ in binary form scaled by $2^{N/2-2}$ in a third register;
>   multiplying the second N-bit register and the third register and storing the result into a fourth N-bit register,
>   adding the first and the fourth N-bit registers, by implementing a saturating addition, to obtain the element $y_i$ scaled by the input scaling factor $S_{in}$, in a fifth N-bit register.

Optionally, the step ii) of calculating each element $y_i$, further includes a step of rounding the right shifted scaled input number $z_i$ by adding $2^{N/2-3}$ to the scaled input number $z_i$ before right shifting by N/2-2.

In an embodiment, in the step vi), the binary number $q_i$ representative of the exponential value of each input number $z_i$ is generated by inputting the corresponding fraction component $fc_i$ retrieved from the lookup table into said result register and right shifting said fraction component $fc_i$ by the integral part $int_i$ in said result register.

In that case, the parameters a, b, c and d for computing the fraction components of the lookup table can be adjusted in a way that the smallest fraction component is close to $2^B/2$, and the constant parameter d is equal to zero.

The step of determining the K probability values $p_i$ derived from the K input number $z_i$ can include:

>   adding the result registers with i varying from 1 to K to obtain a sum number $\Sigma$;
>   obtaining a normalization factor $f_n$ by scaling a value $V_{100}$, obtained by setting to 1 all the bits in a result register and corresponding to a result $q_i$ giving a probability value of 100%, by a normalization scaling factor $S_n$, according to the following expression

$$f_n = \frac{(V_{100} \ll S_n)}{\Sigma}$$

where « $S_n$ represents a left shift by the normalization scaling factor $S_n$; and applying the normalization factor $f_n$ to each result register with an inverse scaling by the normalization scaling factor $S_n$, to obtain a normalized result $q_{i\_n}$, according to the following expression:

$$q_{i\_n} = (q_i * f_n) \gg S_n$$

where $\gg S_n$ represents a right shift by $S_n$ in the result register.

Optionally, for precision improvement, the normalization factor $f_n$ is rounded using the modified expression

$$f_n = \frac{\left(V_{100} \ll S_n + \frac{\Sigma}{2}\right)}{\Sigma} \ .$$

For further precision improvement, the right shift by $S_n$ in the result register can also be combined with a rounding by adding $2^{Sn-1}$ to $q_i * f_n$ before right shifting by $S_n$.

In another embodiment, in the step vi), the binary number $q_i$ representative of the exponential value of each input number $z_i$ is generated in said result register in the form of an IEEE 754 floating-point number including an exponent and a mantissa, wherein the exponent is a combination of the integral part $int_i$ in binary form and the IEEE 754 exponent bias, and the mantissa is derived from the fraction component $fc_i$ retrieved from the lookup table.

In that case, the parameters a, b, c and d for computing the fraction components $fc_i$ of the lookup table can be adjusted in a way that the fraction components of the lookup table match the IEEE 754 mantissa

The method can further include a step of deriving each input numbers $z_i$ from the corresponding input number $z_i$, including:

selecting the maximal input number $x_{max}$,
for each input number $z_i$, performing one of the two following steps:

i) subtracting $x_{max}$ from $x_i$ so as to obtain a negative or zero input number $z_i$,
ii) subtracting $x_i$ from $x_{max}$ so as to obtain a zero or positive input number $z_i$.

The above step can be performed on numbers already scaled by the input scaling factor.
The present disclosure also concerns:

- a computer program including instructions which, when the program is executed by a computer, cause the computer to carry out the steps of the method previously defined; and
- a data processing device including a data processing device responsible for performing the steps of the method previously defined.

BRIEF DESCRIPTION OF THE DRAWINGS

Other features, purposes and advantages of the disclosure will become more explicit by means of reading the detailed statement of the non-restrictive embodiments made with reference to the accompanying drawings.

Figure 1 illustrates a method of executing a SoftMax function on a processor, according to the prior art.
Figure 2 illustrates a method of executing a SoftMax function, according to a first embodiment.
Figures 3A-3C illustrate a numerical example of the method of figure 2.
Figure 4 is a flowchart of the step of the method of figure 2.
Figure 5 illustrates a method of executing a SoftMax function, according to a second embodiment.
Figure 6 is a flowchart of the step of the method of figure 5.
Figure 7 is a functional block diagram of a data processing device for executing the SoftMax function according to the first embodiment.
Figure 8 illustrates a layout for a 32-bit floating point as defined by the IEEE standard for floating-point arithmetic (IEEE 754).

DETAILED DESCRIPTION

The SoftMax function is a function that turns a vector of $K$ input numbers (real values) into a vector of $K$ output numbers (real values) that add up to 1. The input numbers can be positive, negative or zero. The SoftMax function transforms them into values between 0 and 1, that can be interpreted as probabilities. If one of the input number is small or negative, the SoftMax turns it into a small probability, and if an input is positive and large, then it turns it into a large probability.
A multi-layer neural network ends in a penultimate layer which outputs real-valued scores that are not conveniently scaled. The SoftMax function can be used in the final layer, or last activation layer, of the neural network to convert the scores to a normalized probability distribution, which can be displayed to a user or used as input to another system.
By convention, the SoftMax function can use the following mathematical formula to compute output values between 0 and 1:

$$\sigma(z)_i = \frac{e^{z_i}}{\sum_{j=1}^{K} e^{z_j}} \text{ for } i = 1, \dots, K \text{ and } z = (z_1, \dots, z_K) \in \mathbb{R}^K \qquad (1)$$

where

- $z_i$ represents an input number (real value);
- $\sigma(z)_i$ represents an output value (real value);
- $K$ is the total number of input numbers.

The implementation of the SoftMax function can involve a floating-point calculation of the exponential function for each input number $z_i$. The calculation of the exponentials $e^{z_i}$ is costly in terms of computing resources and energy consumption. It takes a lot of computing cycles and run time.
The present disclosure concerns a computer-implemented method of executing the SoftMax function on a data processing device 100, that requires fewer computing efforts and less run time than conventionally.

In the present disclosure, the exponentiation is turned into an exponentiation of 2 according to the following mathematical relationship:

$$e^{z_i} = \left(2^{log_2 e}\right)^{z_i} = 2^{log_2 e * z_i} = 2^{y_i} \qquad (2)$$

where $y_i = log_2 e * z_i = \dfrac{1}{ln(2)} * z_i$ and $\dfrac{1}{ln(2)} \cong 1.442695041$ and

A computer (or a processor) is more efficient and performs fewer computing cycles at calculating two to the power of a given exponent than the exponential function.

In the present disclosure, the computer-implemented method of executing the SoftMax function on the data processing device 100 is based on an exponentiation of 2 and uses a lookup table T of a small size to reduce the calculation efforts. The present method replaces the floating-point calculation of the exponential function by some shifts in registers, integer additions and integer multiplications, and limits the floating-point operations.

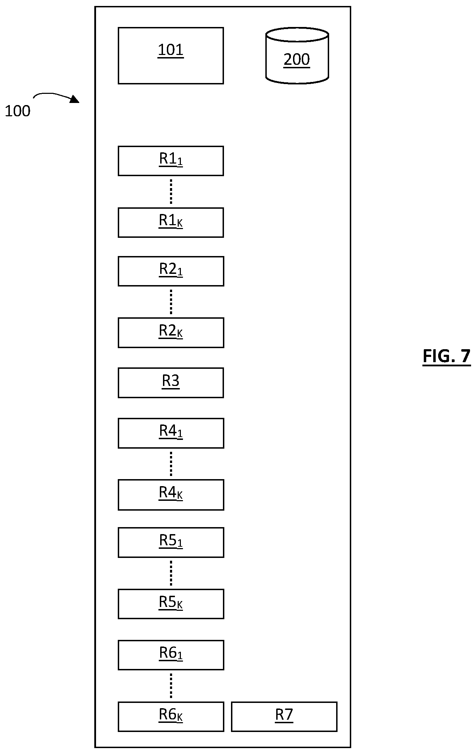

The computer-implemented method of the present disclosure is implemented on a data processing device 100, represented in figure 7, that has a processor 101, a memory 200 for storing the lookup table T and registers. In an embodiment, the registers include N-bit registers and N/2-bit registers. The number N is advantageously of the form $2^n$, n being an integer with n≥1. As well known by the person skilled in the art, a N/2-bit register can be implemented using half of a N-bit register. For example, N is equal to 32. However, N could have any other value, for example 16 or 64.

In a preliminary step S10 of the method, a lookup table T is computed and stored in the memory 200 in the data processing device 100. The lookup table T can be computed by the data processing device 100 itself, or by any other data processing device and then transferred to the data processing device 100.

The lookup table T contains M fraction components $fc_j$ in binary form, all derived from the expression $2^{\left(\frac{j}{M}\right)}$ where j is a lookup index consisting in an integer varying from 0 to M-1. For example, M is equal to 256. However, any other size M of the lookup table T, preferably of the kind $M=2^m$ (m being an integer), could be used.

The computation of the M fraction components $fc_j$ of the lookup table T (with $0 \leq j \leq M - 1$) can be calculated using the following expression:

$$fc_j = a * 2^{\left(b*\left(\frac{j}{M}\right)+c\right)} - d \qquad (3)$$

where

a, b, c and d are constant parameters;
b is either 1 or -1,
a includes an output scaling factor $S_{out}$, where $S_{out}$ is equal to $2^B$ and B is a number of desired bits for the computed exponential values,
d is a multiple of a.

The lookup table T stores in order M fraction components $fc_j$ with j going from 0 to M-1, the index j giving the position of the fraction component $fc_j$ in the lookup table T. The expression (3) covers different variants of the lookup table T. In the different embodiments that will be described later, different variants of the lookup table T defined by the expression (3), based on different sets of constant parameters a, b, c, d, are used.

In an embodiment, the number B of desired bits for the results, namely for the exponential values computed by the present method, is derived from the size N (in number of bits) in registers. For example, B can be equal to N/2. In case that N is 32, B is equal to 16. B could be equal to any other value, preferably of the type $2^m$, m being an integer.

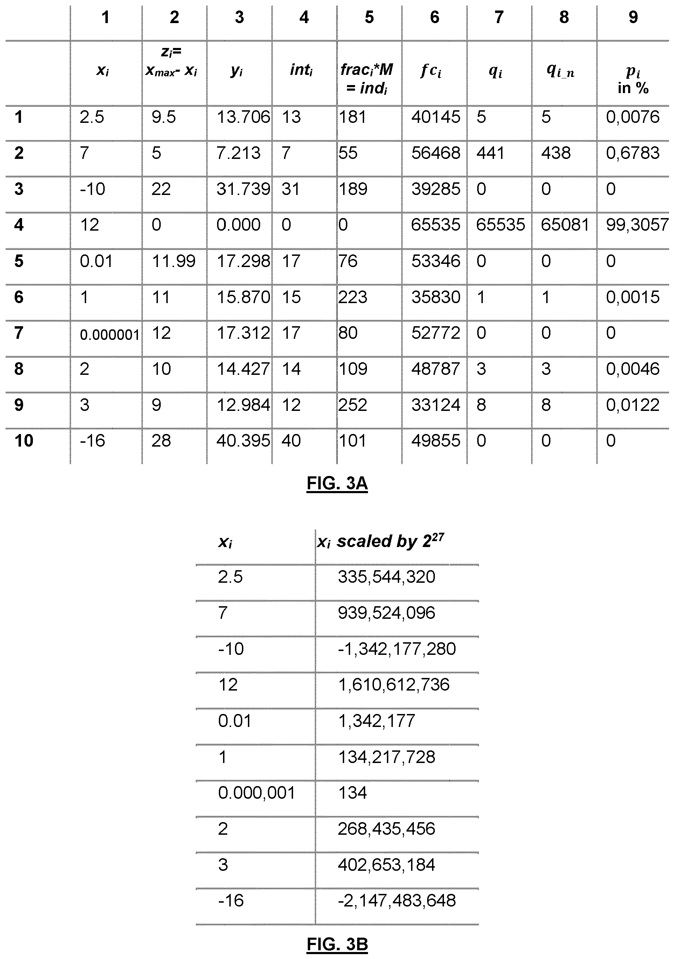

A first embodiment of the computer-implemented method of executing the SoftMax function on the data processing device 100, that can be termed as a positive and fixed-point approach, will now be described with reference to figures 2 and 3A-3C.

The first embodiment uses a first variant of the lookup table T1. The constant parameters for computing the fraction components $fc_j$ of the lookup table T1 are set as follows:

$$a = S_{out} - 1 = 2^B - 1;$$

b=-1; c=0; d=0.

In other words, the fraction components $fc_j$ of the lookup table T1 are computed using the expression:

$$fc_j = (2^B - 1) * 2^{\left(\frac{-j}{M}\right)} \tag{4}$$

Thus, the parameters a, b, c and d for computing the fraction components $fc_j$ are adjusted in a way that:

- the largest fraction component is $fc_0 = 2^B - 1 = S_{out} - 1$ and

- the smallest fraction component is $fc_{M-1} = (2^B - 1) * 2^{\left(\frac{-(M-1)}{M}\right)} \approx \frac{2^B}{2} = \frac{S_{out}}{2}$ (in other words: close to $\frac{S_{out}}{2}$).

In a first step S11, the data processing device 100 receives a vector of K original input numbers $x_i$. The original input numbers $x_i$ are real values. For example, they are the real-valued scores at the output of a multi-layer neural network, such as a classification neural network.

In an embodiment, typically in case that the input into the data processing device 100 is an output from a neural network, the original input numbers $x_i$ received in the step S11 are already scaled by an input scaling factor $S_{in} = 2^\sigma$ and rounded to an integer (the nearest integer) so as to be stored in N-bit registers. For example, the scaling happens in the input to the neural network which delivers data into a SoftMax operator. In such a case, the scaling happens outside the SoftMax operator. The input scaling factor $S_{in}$ can be chosen depending on the expected smallest and largest values of the original input numbers and the size of the N-bit registers. After scaling by $S_{in}$, all the scaled numbers $x_i$ can advantageously fit $-2^{N-1}$ and $2^{N-1}-1$ (in the signed integer representation)..

In another embodiment, the original input numbers are scaled in the input to the data processing device 100.

For example, the original input values $x_i$ in the table of figure 3A are scaled by $2^{27}$ and rounded to the nearest integer to be stored in 32-bit registers. The corresponding decimal values are indicated in the table of figure 3B, as an illustrative example.

In a step S12, the processor 101 derives an input number $z_i$ from each original (already scaled by $S_{in}$) input number $x_i$ and obtains K input number $z_i$ corresponding respectively to the K input numbers $x_i$ (positive, negative or zero) with $i = 1,..., K$. The first embodiment is a positive approach, which means that the input numbers $z_i$ are positive or zero. Thus, in the first embodiment, deriving each input numbers $z_i$ from the original input number $x_i$ includes selecting the maximal original input number $x_{max}$ and subtracting $x_i$ from $x_{max}$ so as to obtain a input number $z_i$ that is positive or equal to zero. In other words, the input numbers $z_i$ are calculated based on the expression $z_i = x_{max} - x_i$. The K input numbers $z_i$ can be stored in the first N-bit registers $R1_i$ by overwriting the original input numbers $x_i$. Alternatively, the K input numbers $z_i$ could be stored in other N-bit registers.

Figure 3A is a table illustrating an example of original input numbers $x_i$ in the first column and derived positive input numbers $z_i$ ($= x_{max} - x_i$) in the second column. The numbers are represented by decimal values without the scaling by $S_{in}$, for the sake of clarity.

In a next step S14, the input numbers $z_i$ (scaled by $Si_n = 2^\sigma$) are multiplied by $1/\ln(2)$ ($\cong 1.442695041$) to obtain the numbers $y_i$ (corresponding to $y_i == \frac{z_i}{ln(2)}$, scaled by $S_{in} = 2^\sigma$). In the first embodiment, the multiplication of each $z_i$ stored in a N-bit register $R1_i$, by the constant value $1/\ln(2)$, is optimized by using a cheaper N/2-bit*N/2-bit multiplication resulting in a N-bit result, as explained below. As an illustrative example, N is equal to 32 bits.

The step S14 includes the following steps (or sub-steps), carried out by the processor 101 for each (scaled) input number $z_i$.

In a step S140, the processor 101 provides the (scaled) input number $z_i$ in the first N-bit register $R1_i$ (in the given example: in the first 32-bit register $R1_i$).

In a step S142, the processor 101 performs a right shifting of the (scaled) input number $z_i$ by N/2-1 into a second N/2-bit register $R2_i$ (in the given example: it is a right shifting by 15 bits in a second 16-bit register $R2_i$). In other words,

the N/2-1 (15 in the given example) less significant bits are discarded by right shifting. The N/2+1 (17 in the given example) most significant bits are processed according to the following processing rules:

- if the scaled input number $z_i$, after right shifting by N/2-1, does not overflow the second N/2-bit register $R2_i$, fitting the shifted number $z_i$ into said second N/2-bit register $R2_i$. It means that, when N is equal to 32 for example, if the most significant bit (the 32th bit) of the number $z_i$ is 0, the 16 least significant of the 17 bits of the scaled number $z_i$ right shifted by 15 are simply transferred into the second N/2 bit register $R2_i$,
- if the scaled input number $z_i$, after right shifting by N/2-1, overflows the second N/2-bit register $R2_i$, saturating said second N/2-bit register $R2_i$. It means that if the most significant (the Nth bit) bit of $z_i$ is 1, each of the other N/2 (e.g., 16) most significant bits (from the (N-1)th to the N/2th bit) are set to 1 and transferred into the second N/2-bit register $R2_i$ that is consequently saturated.

The step S142 results in storing a number referenced as $z_i''$ in the second N/2-bit register $R2_i$. In the domain of decimal numbers, the step of right shifting the scaled input number $z_i$ by N/2-1 bits corresponds to a division by $2^{N/2-1}$

Optionally, the right shifting by N/2-1 of the (scaled) input number $z_i$ is preceded by a rounding step S141 of adding $2^{N/2-2}$ to the (scaled) input number $z_i$. In this way, the right shifted number $z_i$, referenced as $z_i''$, is rounded.

In another step S143, the processor 101 provides (or loads) the constant value of $\left(\frac{1}{ln(2)} - 1\right)$ scaled by $2^{N/2-1}$ in binary form in a third N/2-bit register R3. The value of $\left(\frac{1}{ln(2)} - 1\right)$ can be precalculated and stored (optionally after scaling by $2^{N/2-1}$) in memory in the data processing device 100 or calculated in real time, when needed.

In a step S144, the processor 101 calculates the product of the second N/2-bit register $R2_i$ and the third N/2-bit register R3 (in other words: the multiplication of $z_i''$ by $\left(\frac{1}{ln(2)} - 1\right)$ scaled by $2^{N/2-1}$) and stores the product result into a fourth N-bit register $R4_i$. The product result corresponds to $\left(\frac{1}{ln(2)} - 1\right) * z_i \cong 0.442695041 * z_i,$ scaled by the input scaling factor $S_{in}=2^\sigma$.

In a step S145, the processor 101 adds the first N-bit register $R1_i$ and the fourth N-bit register $R4_i$ to obtain the element $y_i$, scaled by the input scaling factor $S_{in}$, that is stored into a fifth N-bit register $R5_i$. Optionally, the addition S145 is a saturating addition, which means that if the result of the addition overflows the N-bit register $R5_i$ (in other words: is greater than the maximum value in the N-bit register $R5_i$) all the bits are set to 1 in the N-bit register $R5_i$ (in other words: the N-bit register $R5_i$ is set to the maximum). The saturation allows to avoid some unreasonable results, such as low probabilities getting very large by numerical overflow due to the two's complement representation.

Alternatively, the result of the addition of the step S145 could be overwritten in one of the two N-bit registers $R1_i$ and $R4_i$.

The step S14 ends by providing the element (number) $y_i$ in the binary domain scaled by $S_{in}$ (=$2^\sigma$).

In a first variant, the step S14 of calculating each element $y_i$ corresponding to $y_i == \frac{z_i}{ln(2)}$ (here already scaled by $S_{in}=2^\sigma$,) is executed as described below.

As previously described, the scaled input numbers $z_i$ are multiplied by 1/ln(2) ($\cong$ 1.442695041) to obtain the numbers $y_i$. In the first variant, the step S14 includes the following steps (or sub-steps), carried out by the processor 101 for each (scaled) input number $z_i$.

In a step S140' (identical to the step S140), the processor 101 provides the (scaled) input number $z_i$ in the first N-bit register $R1_i$ (in the given example, a 32-bit register).

In a step S142', the processor 101 performs a right shifting of the scaled input number $z_i$ by N/2-2 in a second N-bit register $R2_i$ (in the given example: it is a right shifting by 14 bits in a 32-bit register $R2_i$). In other words, the N/2-2 (14 in the given example) less significant bits are discarded by right shifting. The N/2+2 (18 in the given example) most significant bits are maintained in the first N-bit register $R2_i$ as the N/2+2 least significant bits (the N/2-2 most significant bits are set to 0). The first and the second N-bit register $R1_i$ and $R2_i$ can be the same N-bit register and two distinct N-bit registers.

Optionally, the step S142' is preceded by a step S141' of rounding the right shifted scaled input number $z_i$ by

adding $2^{N/2-3}$ to the scaled input number $z_i$ before right shifting by N/2-2.

In a step S143', the processor 101 provides the value of $\frac{1}{ln(2)} - 1$ in binary form scaled by $2^{N/2-2}$ in a third register R3.

In a step S144', the processor 101 multiplies each second N-bit register $R2_i$ and the third register R3 and stores the result into a fourth N-bit register $R4_i$. This multiplication is more costly in computing resources than a N/2-bit*N/2-bit multiplication as described in step S144. Alternatively, the second N-bit register $R2_i$ (that can be the first register $R1_i$ in case that $z_i$ is right shifted in the same register in the step S142') can be overwritten by the result of the multiplication (instead of using another N-bit register). In other words, the fourth N-bit register $R4_i$ can be the N-bit register $R2_i$.

In a step S145', the processor 101 adds the first and the fourth N-bit register $R1_i$ and $R4_i$ to obtain the element $y_i$ (scaled by the input scaling factor $S_{in}$). The addition result $y_i$ is stored into a fifth N-bit register R5. The processor 101 can implement a saturating addition of the two registers $R1_i$ and $R4_i$. If the addition result is greater than the maximum value that can be stored in the register $R5_i$, the N-bit register $R5_i$ is set to the maximum (all the N bits are set to 1 in the register $R5_i$).

Any value of the scaled input number $z_i$ or derived from $z_i$ could be maintained in the register $R1_i$ until its last use in the step S145'.

In the first variant, there is no need for saturation. The calculation is more precise (because there 1 more bit of precision for the input number) but also a little more costly in computing resources.

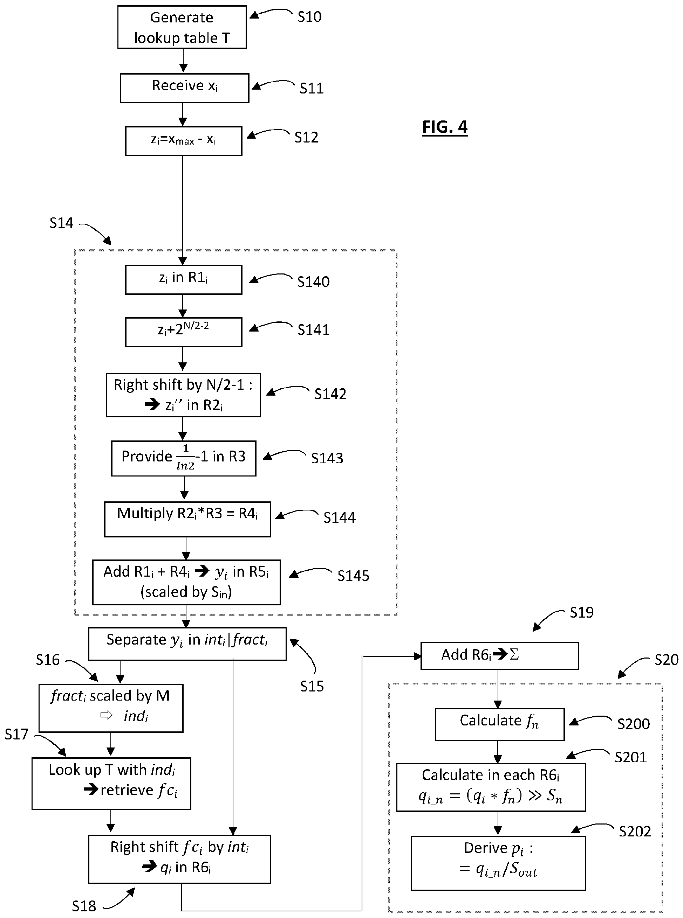

In a second variant, the step S14 of calculating each element $y_i$ ($y_i$ corresponding to $y_i == \frac{z_i}{ln(2)}$, already scaled by $S_{in}=2^\sigma$) is analogous to the first embodiment illustrated in figure 4 but differs from it by the following features:

- in the step S142 of right-shifting, the processor 101 performs a right shifting of the scaled input number $z_i$ by N/2 in a second N/2-bit register $R2_i$ (in the given example: it is a right shifting by 16 bits in a 16-bit register $R2_i$),

- in the step S143, the processor 101 provides (loads) the constant value of $\left(\frac{1}{ln(2)} - 1\right)$ scaled by $2^{N/2}$ in binary form in a third N/2-bit register R3.

This second variant is less precise.

In a following step S15, the processor 101 separates the integral part $int_i$ and the fractional part $frac_i$ of the element $y_i$. The integral part $int_i$ is an integer. It can be derived from the register $R5_i$ by right shifting by $\sigma$ bits (which results in discarding all fractional bits due to the right shift). The fractional part $frac_i$ is a value that is less than 1, and more than zero or equal to zero (in other words: $0 \leq frac_i < 1$). It is also derived from the register $R5_i$ for example by masking off the bits corresponding to the integral part.

In a step S16, the processor 101 scales (in other words: multiplies) the fractional part $frac_i$ by the size M of the lookup table T1 (the multiplication or scaling result being rounded to the nearest integer) to obtain a lookup index $ind_i$, that is an integer between 0 and M-1. The bits for the lookup index $ind_i$ could be extracted directly from the internal representation of $y_i$ (in other words: $y_i$ scaled by $2^\sigma$ which is the content of the register $R5_i$), via a formula indicating which bits to use and which bits to discard to form the index $ind_i$ directly.

In the table of figure 3A, the third column contains the numerical values of the element $y_i$ in the decimal domain, the fourth column contains the corresponding integral parts $int_i$ in the decimal domain and the fifth column contains the corresponding fractional part $frac_i$ scaled by the size M of the lookup table T1 in the decimal domain, in other words the lookup indexes $ind_i$ (j in the expression (4)).

In a step S17, the processor 101 retrieves from the lookup table T1 the fraction component $fc_i$ using the obtained lookup index $indi$ (in other words: the fraction component $fc_i$ located in the lookup table T1 at a position j between 0 and M-1 with j=$ind_i$).

In the table of figure 3A, the sixth column contains the decimal values of the fraction components $fc_i$ corresponding to the lookup indexes indicated in the fifth column. However, as previously explained, the fraction components $fc_i$ are stored in the lookup table T1 in binary form, scaled by the output scaling factor $S_{out}=2^B$ (in the present embodiment $S_{out}=2^{N/2}$, with N=32 in the given example).

In a step S18, for each input number $z_i$, the processor 101 generates in a sixth N/2-bit register $R6_i$, termed as a result register, a binary number $q_i$ representative of the exponential value of said input number $z_i$, by combining said fraction component $fc_i$ retrieved from the lookup table T1 at the step S17 and said integral part $int_i$ determined in the step S15.

The first embodiment is an fixed-point or integer approach. It means that all the operations carried out by the processor 101 are fixed-point operations.

In the first embodiment, generating the binary number $q_i$ representative of the exponential value of each input number $z_i$ in the N/2-bit result register $R6_i$ includes:

- inputting the corresponding fraction component $fc_i$ retrieved from the lookup table T1 at the step S17 into said result register $R6_i$,
- then, right shifting the fraction component $fc_i$ by the integral part $int_i$, in said result register $R6_i$.

The right shifting by the integral part $int_i$ results in discarding the r less significant bits of the fraction component $fc_i$, where p is a number equal to $int_i$. For large values of the integer component $int_i$, all bits of the result register $R6_i$ become equal to zero. The number resulting from the right shifting of the step S18 in each result register $R6_i$, referenced as $q_i$, can be expressed by the following formula:

$$q_i = 2^{-int_i} * fc_i = 2^{-int_i} * (2^B - 1) * 2^{\left(\frac{-j}{M}\right)} = (2^B - 1) * 2^{-(int_i + \frac{j}{M})}$$
$$= (2^B - 1) * 2^{-(int_i + frac_i)} = (2^B - 1) * 2^{-y_i} == (2^B - 1) * e^{-z_i}$$
$$= (2^B - 1) * e^{x_i - x_{max}}$$

As shown by the above relationship, the result number $q_i$ is representative of the exponential value of the original input number $x_i$. In the present embodiment, it is proportional to the exponential of $x_i$.

In figure 3A, the seventh column of the table contains the decimal values of the number $q_i$ in each result register $R6_i$ (after the right shifting of $fc_i$ by $int_i$). As shown in the seventh column, all the result registers $R6_i$ corresponding to the non-meaningful original input numbers $x_i$, namely $x_3$, $x_5$, $x_7$, $x_{10}$ are set to zero.

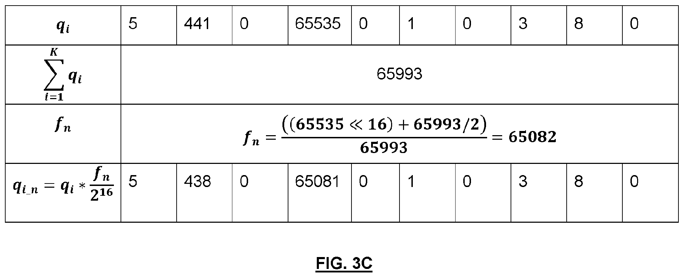

In a step S19, the processor 101 adds all the result registers $R6_i$ with i varying from 1 to K to obtain a sum number $\Sigma$ in a sum register R7 that is a N-bit register. In the illustrative example of the figure 3A, the decimal value of the sum $\Sigma$ is 65993 as shown in figure 3C.

Then, in a step S20, the processor 101 normalizes the result registers $R6_i$ (in other words: the values $q_i$ in the result registers $R6_i$), in order to determine the K probability values derived from the K input numbers $z_i$ (or from the K original input numbers $x_i$).

The step S20 includes different steps (or sub-steps) S200 to S202.

In the first step S200, the processor 101 obtains a normalization factor $f_n$ calculated according to the following expression:

$$f_n = \frac{(V_{100} \ll S_n)}{\Sigma} \qquad (5)$$

where

$V_{100}$ represents the value obtained by setting to 1 all bits in a N/2-bit result register $R6_i$ and corresponds to the result $q_i$ giving a probability value of 100%;

$\ll S_n$ represents a left shift by a normalization scaling factor $S_n$ used for the normalization, for example N/2 (which corresponds to a scale by $2^{N/2}$ in the decimal domain);

$\Sigma$ represents the sum of all result registers $R6_i$ with i varying from 1 to K.

Optionally, for precision improvement, the factor $f_n$ is rounded using the modified expression

$$f_n = \frac{\left(V_{100} \ll S_n + \frac{\Sigma}{2}\right)}{\Sigma} \qquad (5')$$

The normalization factor $f_n$ can be computed by the processor 101 and stored in a memory 201.

With reference to the example in figures 3A-3C, the value $V_{100}$ is 65535, the sum is 65993, the scaling factor is 16 and the normalization factor $f_n$ is given by the following expression:

$$f_n = \frac{\left(65535 \ll 16 + \frac{65993}{2}\right)}{65993} = 65082.$$

Then, in a step S201, the normalization factor $f_n$ is applied to each result register $R6_i$ with a rescaling by the factor $1/S_n$, to obtain a normalized value $q_{i\_n}$ in the result register $R6_i$. The operation of the step S201 can be expressed as follows:

$$q_{i\_n} = (q_i * f_n) \gg S_n$$

where

$q_i$ is the binary value in the result register $R6_i$;
$f_n$ is the normalization factor;
$\gg S_n$ represents a right shift by $S_n$ in the result register $R6_i$.

The operation of step S201 can be combined with a rounding to the nearest integer by adding $2^{S_n-1}$ to $q_i * f_n$ before right shifting by $S_n$ in the result register $R6_i$.

Figure 3C illustrates the registers $R6_i$ before and after normalization S20. It can be seen that the sum of the normalized elements $q_{i\_n}$ is 65636 which corresponds to a total probability that is very close to 100% (only very slightly more than 100% by 1).

The eighth column of the table contains the decimal values of the numbers $q_{i\_n}$.

In an optional step S202, the processor 101 can derive from the normalized values $q_{i\_n}$ in the result registers $R6_i$ the respective probability values $p_i$ (that are decimal numbers) corresponding to the input values $x_i$, by dividing the normalized values $q_{i\_n}$ in the result registers $R6_i$ by the output scaling factor $S_{out}$ ($2^{16}$ in the example of figures 3A-3C). The ninth column of the table in figure 3A contains the probability values $p_i$ expressed in %. The sum of the percentage is very slighty more than 100% (100,0783%).

In the first embodiment, the processor 101 executes mainly integer (fixed-point) operations and some shifts in registers, which allows to determine the probability values $p_i$ corresponding to the input numbers $x_i$ in a fast manner. The run time and energy consumption of the processor 101 are significantly reduced. Furthermore, a microcontroller without capacity for floating-point calculation can easily use the SoftMax function according to the present disclosure.

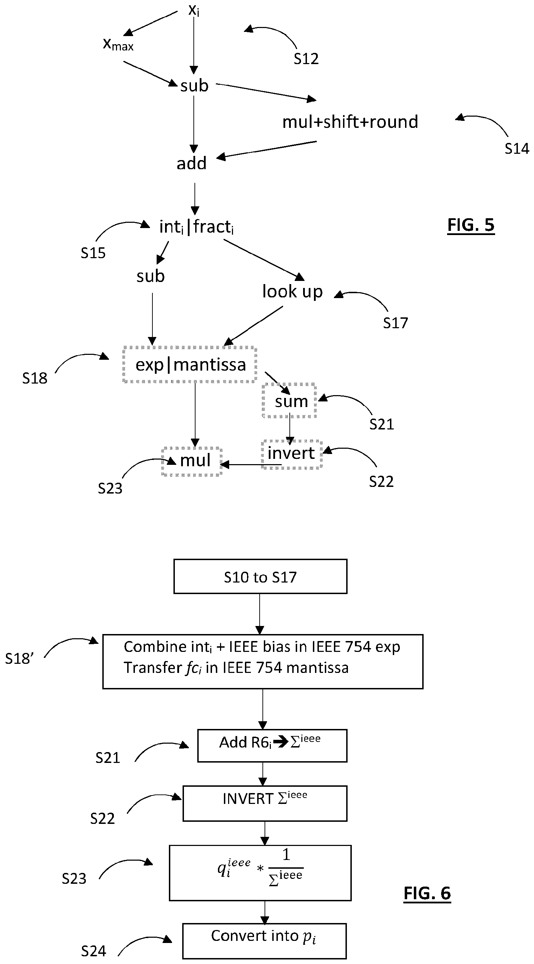

A second embodiment, that can be termed as a positive and floating-point approach, will now be described with reference to figure 6. The second embodiment is based on the first embodiment and only varies from the first embodiment by the features described below.

In the second embodiment, the steps S10 to S17 described in connection with the first embodiment are performed, but the lookup table T2 used in the second embodiment is a different variant of the lookup table T defined by the expression (3).

In the second embodiment, the constant parameters of the expression (3) for computing the fraction components $fc_j$ of the lookup table T2 are set as follows:

$$a = 2 * S_{out} - 2 = 2^{B+1} - 2;$$

b=-1; c=0; $d = S_{out} - 1 = 2^B - 1$.

In other words, the fraction components $fc_j$ of the lookup table T2 are computed using the expression:

$$fc_j = (2^{B+1} - 2) * 2^{\left(\frac{-j}{M}\right)} - (2^B - 1) \qquad (6)$$

Thus, the parameters a, b, c and d for computing the fraction components $fc_j$ are adjusted in a way that:

- the largest fraction component is $fc_0 = 2^B - 1 = S_{out} - 1$ and
- the smallest fraction component is

$$fc_{M-1} = (2^{B+1} - 2) * 2^{\left(\frac{-(M-1)}{M}\right)} - (2^B - 1) \approx 0.$$

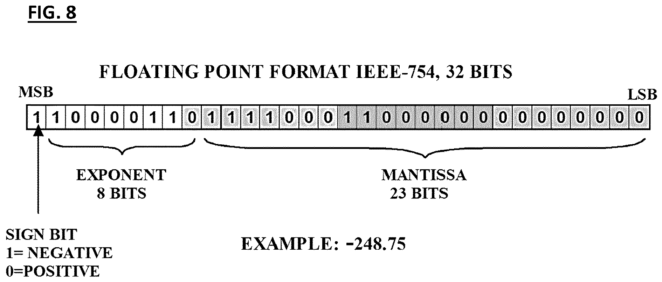

In the second embodiment, the step S18' of generating a binary number $q_i$ representative of the exponential value of each input number $z_i$, in a N/2-bit result register $R6_i$, by combining the fraction component $fc_i$ retrieved from the lookup table T2 at the step S17 and the integral part $int_i$ determined in the step S15 is different from the step S18 of the first embodiment, due to the fact that the second embodiment is a floating-point approach. It means that all the binary numbers representative of the exponential values of the input numbers $z_i$ are floating-point numbers, here IEEE 754 floating-point numbers. They are referred as $q_i^{ieee}$. According to the IEEE standard for Floating-Point Arithmetic (IEEE 754), a N-bit floating point has a layout defined by one sign bit (the most significant bit), a N1-bit exponent part and a N2-bit mantissa. Figure 8 illustrates an example of a layout for a 32-bit floating point number (-248,75), as defined by the standard IEEE 754. The exponent is a 8-bit part and the mantissa is a 23-bit part.

N-bit registers can be used to store the numbers $q_i^{ieee}$ and, for example, N=32 bits.

In the second embodiment, generating the binary floating-point number $q_i^{ieee}$ representative of the exponential value of each input number $z_i$ in the N-bit result register $R6_i$ in the step S18 includes:

- combining the integral part $int_i$ determined in the step S15 and the IEEE 754 exponent bias (here by subtracting the integral part $int_i$ from the bias) and transferring the the integral part $int_i$ combined with the IEEE 754 exponent bias in the exponent part of the floating-point number $q_i^{ieee}$, in the N-bit result register $R6_i$;
- transferring the fraction component $fc_i$ retrieved from the lookup table T2 at the step S17 into the mantissa of the floating-point number $q_i^{ieee}$ in the N-bit result register $R6_i$, if needed by adding bits set at 0 on the least significant bits (for example, if the fraction component $fc_i$ is represented by 16 bits, it is transferred to the 16 most significant bits of the mantissa and the other least significant bits of the mantissa are set to 0).

Thus, the exponent of $q_i^{ieee}$ is a combination of the integral part $int_i$ stored in binary form in said result register $R6_i$ and the IEEE 754 exponent bias, and the mantissa of $q_i^{ieee}$ is directly derived from the fraction component $fc_i$ retrieved from the lookup table T2.

In the second embodiment, the parameters a, b, c and d for computing the fraction components $fc_i$ of the lookup table T2 are adjusted in a way they match IEEE 754 fraction components, which means that the fraction components $fc_i$ are identical or directly transformable from one to the other, for example by simply adding 0 on the right.

Then, in a step S21, the processor 101 adds the result registers $R6_i$ with i varying from 1 to K by performing a floating-point addition, to obtain a sum $\Sigma^{ieee}$ (floating-point number) in a register R7.

In a step S22, the processor 101 calculates the inverse of the sum $\Sigma^{ieee}$ and stores the result $\frac{1}{\Sigma^{ieee}}$ in a register R8 (in floating-point).

In a step S23, the processor 101 multiplies each result register $R6_i$ by the register R8. In other words, the product of each result element $q_i^{ieee}$ by $\frac{1}{\Sigma^{ieee}}$ is calculated. The result can be stored in a register $R8_i$ that is a N-bit register.

In a step S24, the decimal probability values $p_i$ corresponding to the original input numbers $x_i$ can be obtained by converting the floating-point numbers stored in the registers $R8_i$ into decimal values.

In the second embodiment, the efforts to use floating points are also reduced. The processor 101 calculates more in fixed points and less in floating points than in the prior art.

A third embodiment, that can be termed as a negative and integer approach, will now be described. The third embodiment is based on the first embodiment and only varies from the first embodiment by the features described below.

The third embodiment mainly differs from the first embodiment by the features that

each input number $z_i$ is negative or zero and derived from the original input number $x_i$ by subtracting $x_{max}$ from $x_i$ so as to obtain input number $z_i$,

the lookup table T3 is another variant of the lookup table defined by the general expression (3).

In the third embodiment, the constant parameters of the expression (3) for computing the fraction components $fc_j$ of the lookup table T3 are set as follows:

$$a = \frac{S_{out}}{2} = 2^{B-1};$$

b=+1; c=0; d=0.

In other words, the fraction components $fc_j$ of the lookup table T2 are computed using the expression:

$$fc_j = 2^{B-1} * 2^{\left(\frac{j}{M}\right)} \qquad (7)$$

Thus, the parameters a, b, c and d for computing the fraction components $fc_j$ are adjusted in a way that:

- the smallest fraction component is $fc_0 = 2^{B-1} = \frac{S_{out}}{2}$ $fc_0$ and
- the largest fraction component is

$$fc_{M-1} = 2^{B-1} * 2^{\left(\frac{M-1}{M}\right)} \approx 2^B = S_{out}.$$

In the third embodiment, the steps S10 to S20 described in connection with the first embodiment are performed, with the only differences indicated above.

A fourth embodiment, that can be termed as a negative and fixed-point approach, will now be described. The fourth embodiment is based on the second (fixed-point) embodiment and only varies from the second embodiment by the features described below.

The fourth embodiment mainly differs from the second embodiment by the features that

each input number $z_i$ is negative or zero and derived from the original input number $x_i$ by subtracting $x_{max}$ from $x_i$ so as to obtain input number $z_i$,

the lookup table T4 is another variant of the lookup table defined by the general expression (3).

In the fourth embodiment, the constant parameters of the expression (3) for computing the fraction components $fc_j$ of the lookup table T4 are set as follows:

$a = S_{out} = 2^B$; b=+1; c=0; $d = S_{out} = 2^B$.

In other words, the fraction components $fc_j$ of the lookup table T4 are computed using the expression:

$$fc_j = 2^B * 2^{\left(\frac{j}{M}\right)} - 2^B \qquad (7)$$

Thus, the parameters a, b, c and d for computing the fraction components $fc_j$ are adjusted in a way that:

- the smallest fraction component is $fc_0 = 0$ and
- the largest fraction component is

$$fc_{M-1} = 2^B * 2^{\left(\frac{M-1}{M}\right)} - 2^B \approx 2^B = S_{out}.$$

In the fourth embodiment, the steps S10 to S18 and S21 to S24 described in connection with the second embodiment are performed, with the only differences indicated above.

In the step S18, combining the integral part $int_i$ and the IEEE 754 exponent bias may consist in either subtracting the integral part $int_i$ from the IEEE 754 exponent bias or adding the integral part $int_i$ and the IEEE 754 exponent bias, depending on the sign of the integral part $int_i$. In case that the input value $z_i$ is positive (as in the second embodiment), the int integral part $int_i$ is subtracted from the IEEE 754 exponent bias. But, in case that the input value $z_i$ is negative, the integral part $int_i$ is added to the IEEE 754 exponent bias, as in the fourth embodiment.

A fifth embodiment, that can be termed as a negative, 0.5, integer approach, will now be described. The fifth embodiment is based on the first embodiment and only varies from the first embodiment by the use of another variant of the lookup table T5 defined by the general expression (3).

In the fifth embodiment, the constant parameters of the expression (3) for computing the fraction components $fc_j$ of the lookup table T5 are set as follows:

$$a = S_{out} = 2^B; \quad b=-1 \; ; \quad c = \frac{-0.5}{M}; \quad d=0.$$

In other words, the fraction components $fc_j$ of the lookup table T5 are computed using the expression:

$$fc_j = 2^B * 2^{\left(\frac{-j-0.5}{M}\right)} \tag{7}$$

Thus, the parameters a, b, c and d for computing the fraction components $fc_j$ are adjusted in a way that:

- the largest fraction component is $fc_0 \approx 2^B = S_{out}$ and
- the smallest fraction component is

$$fc_{M-1} = 2^B * 2^{\left(\frac{-M+0.5}{M}\right)} \approx \frac{2^B}{2} = \frac{S_{out}}{2}.$$

In the fifth embodiment, the steps S10 to S20 described in connection with the first embodiment are performed, with the only differences indicated above.

A sixth embodiment, that can be termed as a negative, 0.5, fixed-point approach, will now be described. The sixth embodiment is based on the second embodiment and only varies from the second embodiment by the use of another variant of the lookup table T6 defined by the general expression (3).

In the sixth embodiment, the constant parameters of the expression (3) for computing the fraction components $fc_j$ of the lookup table T6 are set as follows:

$$a = 2 * S_{out} = 2^{B+1};$$

$$b=-1; \quad c = \frac{-0.5}{M}; \quad d = S_{out} = 2^B.$$

In other words, the fraction components $fc_j$ of the lookup table T6 are computed using the expression:

$$fc_j = 2^{B+1} * 2^{\left(\frac{-j-0.5}{M}\right)} - 2^B$$

$$(7)$$

Thus, the parameters a, b, c and d for computing the fraction components $fc_j$ are adjusted in a way that:

- the largest fraction component is $fc_0 \approx 2^B = S_{out}$ and
- the smallest fraction component is

$$fc_{M-1} = 2^{B+1} * 2^{\left(\frac{-M+0.5}{M}\right)} - 2^B \approx 0.$$

In the sixth embodiment, the steps S10 to S18 and S21 to S24 described in connection with the second embodiment are performed, with the only differences indicated above.

The lookup tables storing fraction components $fc_j$ derived from the expression $2^{\left(\frac{j}{N}\right)}$, with b=+1, and the lookup tables storing fraction components $fc_j$ derived from the expression $2^{\left(\frac{-j}{N}\right)}$, with b=-1, basically store identical numbers but in opposite order (potentially with some shift by the constant c).

In the fixed-point (or integer) approaches (first, third and fifth embodiments), the constant parameter d is set to zero.

For stability improvement, all operations with a potential to overflow a register (like additions, subtractions, clipping from N/2+1 to N/2 bits) should be implemented as saturating operations. In other words, if the result of an operation in a register is greater than the maximum value that can be stored in said register, the register is set to the maximum (all the register bits are set to one.

For precision improvement, all divisions (including any division implemented by performing a right shift in a register) are preferably rounded, by adding half the divisor to the dividend. In other words, any division of the type "a divided by b" is advantageously executed by adding 'b/2' to the dividend 'a' before dividing by the divisor 'b' (or performing a corresponding right shift in a register).

The present disclosure also concerns:

a computer program including instructions which, when the program is executed by a computer, cause the computer to carry out the steps of the method according to any of the embodiments previously defined;
a data processing device including a processor in charge of performing the steps of the method according to any of the embodiments previously defined.

**Claims**

1. A computer-implemented method of executing a SoftMax function on K input number $z_i$, with $1 \le i \le K$, carried out by a data processing device (100) including the computation, for each input number $z_i$, of a probability value $p_i$ that is equal to the exponential value of said input number $z_i$ divided by a sum $\Sigma$ of the exponential values of the K input number $z_i$;
**characterized in that** the data processing device:

i) pre-stores (S10), in a memory (200), M fraction components $fc_j$ in binary form, derived from the expression $2^{\left(\frac{j}{M}\right)}$ where j is an integer varying from 0 to M-1, said M fraction components forming a lookup table (T) of size M;

ii) for each input number $z_i$, calculates (S14) an element $y_i$ of a number of the form $2^{y_i}$ where $y_i$ represents $\frac{z_i}{ln(2)}$;
iii) separates (S15) the element $y_i$ into an integral part $int_i$ and a fractional part $fract_i$;
iv) determines (S16) a lookup index $ind_i$ that corresponds to the fractional part $fract_i$ scaled by the size M;
v) retrieves (S17) the fraction component $fc_i$ from the lookup table (T) with the obtained lookup index $ind_i$ ;
vi) generates, in a result register (R6$_i$), a binary number $q_i$ representative of the exponential value of said input number $z_i$, by combining said fraction component $fc_i$ retrieved from the lookup table (T) and said integral part $int_i$;
v) adds the K result registers (R6$_i$) corresponding to the K input numbers $z_i$ into a sum register (R7);
vi) determines the K probability values $p_i$ from the K result registers (R6$_i$) and the sum register (R7).

2. The method according to claim 1, further including a preliminary step (S10) of computing the M fraction components $fc_j$ of the lookup table (T), with j varying from 0 to M-1, by using the following formula

$$fc_j = a * 2^{\left(b*\left(\frac{j}{M}\right)+c\right)} - d,$$

where

a, b, c and d are constant parameters;

b is either 1 or -1,

a includes an output scaling factor $S_{out}$, where $S_{out}$ is equal to $2^B$ and B is a number of desired bits for the computed exponential values,

d is a multiple of a;

wherein the parameters a, b, c and d for computing the fraction components $fc_j$ are adjusted in a way that the largest fraction component is equal or close to $2^B-1$.

3. The method according to any of claims 1 and 2, wherein each input number $z_i$ in binary form is scaled by an input scaling factor $S_{in}=2^\sigma$ so as to be stored in a first N-bit register (R1i);

wherein the input scaling factor $S_{in}$ is determined depending on the expected smallest and largest values of the numbers $z_i$ and the size N of the first N-bit registers.

4. The method according to claim 3, wherein, the step ii) of calculating each element $y_i$ includes the following steps performed by the data processing device (100):

providing (S140) the corresponding scaled input number $z_i$ in the first N-bit register (R1i);

right shifting (S142) the scaled input number $z_i$ by N/2-1 and processing the right shifted scaled input number $z_i$ according to the following processing rules to provide a transformed input number $z_i$" into a second N/2-bit register (R2$_i$),

- if the scaled input number $z_i$, after right shifting by N/2-1, does not overflow the second N/2-bit register (R2$_i$), fitting the shifted scaled input number $z_i$ into said second N/2-bit register (R2$_i$),
- if the scaled input number $z_i$, after right shifting by N/2-1, overflows the second N/2-bit register (R2$_i$), saturating said second N/2 bit register (R2$_i$);

providing (S143) the value of $\left(\frac{1}{ln(2)} - 1\right)$ scaled by $2^{N/2-1}$ in binary form in a third N/2-bit register (R3);

calculating (S144) the product of the second and third N/2-bit registers (R2$_i$, R3) and storing the product result into a fourth N-bit register (R4$_i$),

adding (S145) the first N-bit register (R1$_i$) and the fourth N-bit register (R4$_i$), by implementing a saturating addition, to obtain an element $y_i$, that is scaled by the input scaling factor $S_{in}$, in a fifth N-bit register (R5$_i$).

5. The method according to claim 4, wherein the step ii) of calculating each element $y_i$, further includes a step (S141) of rounding the right shifted scaled input number $z_i$" by adding $2^{N/2-2}$ to the scaled input number $z_i$ before right shifting by N/2-1.

6. The method according to claim 3, wherein, the step ii) of calculating each element $y_i$, with $y_i = \dfrac{z_i}{ln(2)},$ is carried out by the data processing device (100), and includes the following steps :

providing the corresponding scaled input number $z_i$ in binary form in a first N-bit register (R1i);

right shifting the scaled input number $z_i$ in binary form by N/2-2 in a second N-bit register (R2$_i$),

providing the value of $\dfrac{1}{ln(2)} - 1$ in binary form scaled by $2^{N/2-2}$ in a third register (R3);

multiplying the second N-bit register (R2$_i$) and the third register (R3) and storing the result into a fourth N-bit register (R4$_i$),

adding the first and the fourth N-bit registers (R1$_i$, R4$_i$), by implementing a saturating addition, to obtain the element $y_i$ scaled by the input scaling factor $S_{in}$, in a fifth N-bit register (R5$_i$).

7. The method according to claim 6, the step ii) of calculating each element $y_i$, further includes a step of rounding the right shifted scaled input number $z_i$ by adding $2^{N/2-3}$ to the scaled input number $z_i$ before right shifting by $N/2-2$.

8. The method according to any of claims 1 to 7, wherein, in the step vi), the binary number $q_i$ representative of the exponential value of each input number $z_i$ is generated by inputting the corresponding fraction component $fc_i$ retrieved from the lookup table into said result register ($R6_i$) and right shifting (S18) said fraction component $fc_i$ by the integral part $int_i$ in said result register ($R6_i$).

9. The method according to claim 8, wherein the parameters a, b, c and d for computing the fraction components of the lookup table (T) are adjusted in a way that the smallest fraction component is close to $2^B/2$, and the constant parameter d is equal to zero.

10. The method according to claim 8 or 9, wherein determining the K probability values $p_i$ derived from the K input number $z_i$ includes:

    adding the result registers ($R6_i$) with i varying from 1 to K to obtain a sum number $\Sigma$;
    obtaining (S200) a normalization factor $f_n$ by scaling a value $V_{100}$, obtained by setting to 1 all the bits in a result register ($R6_i$) and corresponding to a result $q_i$ giving a probability value of 100%, by a normalization scaling factor $S_n$, according to the following expression

$$f_n = \frac{(V_{100} \ll S_n)}{\Sigma}$$

    where « $S_n$ represents a left shift by the normalization scaling factor $S_n$; and
    applying (S201) the normalization factor $f_n$ to each result register ($R6_i$) with an inverse scaling by the normalization scaling factor $S_n$, to obtain a normalized result $q_{i\_n}$, according to the following expression:

$$q_{i\_n} = (q_i * f_n) \gg S_n$$

    where $\gg S_n$ represents a right shift by $S_n$ in the result register ($R6_i$).

11. The method according to any of claims 1 to 7, wherein, in the step vi), the binary number $q_i$ representative of the exponential value of each input number $z_i$ is generated (S18') in said result register ($R6_i$) in the form of an IEEE 754 floating-point number including an exponent and a mantissa, wherein
    the exponent is a combination of the integral part $int_i$ in binary form and the IEEE 754 exponent bias, and
    the mantissa is derived from the fraction component $fc_i$ retrieved from the lookup table.

12. The method according to claim 11, wherein the parameters a, b, c and d for computing the fraction components $fc_i$ of the lookup table are adjusted in a way that the fraction components of the lookup table (T) match the IEEE 754 mantissa.

13. The method according to any of claims 1 to 8, further including a step of deriving each input numbers $z_i$ from the corresponding input number $z_i$, including:

    selecting the maximal input number $x_{max}$,
    for each input number $z_i$, performing one of the two following steps:

        i) subtracting $x_{max}$ from $x_i$ so as to obtain a negative or zero input number $z_i$,
        ii) subtracting $x_i$ from $x_{max}$ (S12) so as to obtain a zero or positive input number $z_i$.

14. A computer program including instructions which, when the program is executed by a computer, cause the computer to carry out the steps of the method of any of claims 1 to 13.

15. A data processing device (100) including a data processing device responsible for performing the steps of the method of any of claims 1 to 14.

X

x_i

S1

x_max

sub

exp

S2

sum

S3

div

S4

FIG. 1

x_i

x_max

S12

sub

mul+shift+round

S14

add

int_i|fract_i

S15

look up

S17

shift right

S18

Normalize

→ $p_i$

S20

FIG. 2

| | 1 | 2 | 3 | 4 | 5 | 6 | 7 | 8 | 9 |
|---|---|---|---|---|---|---|---|---|---|
| | $x_i$ | $z_i =$ $x_{max} - x_i$ | $y_i$ | $int_i$ | $frac_i * M$ $= ind_i$ | $fc_i$ | $q_i$ | $q_{i\_n}$ | $p_i$ in % |
| 1 | 2.5 | 9.5 | 13.706 | 13 | 181 | 40145 | 5 | 5 | 0,0076 |
| 2 | 7 | 5 | 7.213 | 7 | 55 | 56468 | 441 | 438 | 0,6783 |
| 3 | -10 | 22 | 31.739 | 31 | 189 | 39285 | 0 | 0 | 0 |
| 4 | 12 | 0 | 0.000 | 0 | 0 | 65535 | 65535 | 65081 | 99,3057 |
| 5 | 0.01 | 11.99 | 17.298 | 17 | 76 | 53346 | 0 | 0 | 0 |
| 6 | 1 | 11 | 15.870 | 15 | 223 | 35830 | 1 | 1 | 0,0015 |
| 7 | 0.000001 | 12 | 17.312 | 17 | 80 | 52772 | 0 | 0 | 0 |
| 8 | 2 | 10 | 14.427 | 14 | 109 | 48787 | 3 | 3 | 0,0046 |
| 9 | 3 | 9 | 12.984 | 12 | 252 | 33124 | 8 | 8 | 0,0122 |
| 10 | -16 | 28 | 40.395 | 40 | 101 | 49855 | 0 | 0 | 0 |

**FIG. 3A**

| $x_i$ | $x_i$ scaled by $2^{27}$ |
|---|---|
| 2.5 | 335,544,320 |
| 7 | 939,524,096 |
| -10 | -1,342,177,280 |
| 12 | 1,610,612,736 |
| 0.01 | 1,342,177 |
| 1 | 134,217,728 |
| 0.000,001 | 134 |
| 2 | 268,435,456 |
| 3 | 402,653,184 |
| -16 | -2,147,483,648 |

**FIG. 3B**

| $q_i$ | 5 | 441 | 0 | 65535 | 0 | 1 | 0 | 3 | 8 | 0 |
|---|---|---|---|---|---|---|---|---|---|---|
| $\displaystyle\sum_{i=1}^{K} q_i$ | 65993 | | | | | | | | | |
| $f_n$ | $f_n = \dfrac{\big((65535 \ll 16) + 65993/2\big)}{65993} = 65082$ | | | | | | | | | |
| $q_{i\_n} = q_i * \dfrac{f_n}{2^{16}}$ | 5 | 438 | 0 | 65081 | 0 | 1 | 0 | 3 | 8 | 0 |

**FIG. 3C**

**FIG. 4**

Generate lookup table T — S10

Receive $x_i$ — S11

$z_i = x_{max} - x_i$ — S12

S14

---

$z_i$ in $R1_i$ — S140

$z_i + 2^{N/2-2}$ — S141

Right shift by N/2-1 : → $z_i''$ in $R2_i$ — S142

Provide $\frac{1}{ln2} - 1$ in R3 — S143

Multiply $R2_i * R3 = R4_i$ — S144

Add $R1_i + R4_i$ → $y_i$ in $R5_i$ (scaled by $S_{in}$) — S145

---

Separate $y_i$ in $int_i | fract_i$ — S15

S16

$fract_i$ scaled by M ⇨ $ind_i$

S17

Look up T with $ind_i$ → retrieve $fc_i$

Right shift $fc_i$ by $int_i$ → $q_i$ in $R6_i$

S18

S19

Add $R6_i$ → $\Sigma$

S20

---

Calculate $f_n$ — S200

Calculate in each $R6_i$ $q_{i\_n} = (q_i * f_n) \gg S_n$ — S201

Derive $p_i$ : $= q_{i\_n}/S_{out}$ — S202

---

$x_i$

$x_{max}$

S12

sub

mul+shift+round

S14

add

int$_i$|fract$_i$

S15

**FIG. 5**

sub

look up

S17

exp|mantissa

S18

sum

S21

mul

invert

S23

S22

---

S10 to S17

S18'  Combine int$_i$ + IEEE bias in IEEE 754 exp
Transfer $fc_i$ in IEEE 754 mantissa

S21  Add R6$_i$ ➔ $\Sigma^{ieee}$

S22  INVERT $\Sigma^{ieee}$

S23  $q_i^{ieee} * \dfrac{1}{\Sigma^{ieee}}$

**FIG. 6**

S24  Convert into $p_i$

**FIG. 7**

## FIG. 8

### FLOATING POINT FORMAT IEEE-754, 32 BITS

MSB                                                                              LSB

| 1 | 1 | 0 | 0 | 0 | 0 | 1 | 1 | 0 | 1 | 1 | 1 | 1 | 0 | 0 | 0 | 1 | 1 | 0 | 0 | 0 | 0 | 0 | 0 | 0 | 0 | 0 | 0 | 0 | 0 | 0 | 0 |

EXPONENT
8 BITS

MANTISSA
23 BITS

SIGN BIT
1= NEGATIVE
0=POSITIVE

EXAMPLE: −248.75

Europäisches
Patentamt

European
Patent Office

Office européen
des brevets

# EUROPEAN SEARCH REPORT

Application Number

EP 21 17 4394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 108 021 537 A (UNIV NANJING) 11 May 2018 (2018-05-11) * the whole document * | 1-15 | INV. G06N3/04 G06N3/10 G06F7/483 G06F7/556 |
| A | US 2020/218509 A1 (XU BIN [CN] ET AL) 9 July 2020 (2020-07-09) * abstract * * paragraph [0002] - paragraph [0052] * * paragraph [0078] - paragraph [0172]; figures 1-8, 10 * | 1,14,15 | |
| A | DONG XIAO ET AL: "Hardware Implementation of Softmax Function Based on Piecewise LUT", 2019 IEEE INTERNATIONAL WORKSHOP ON FUTURE COMPUTING (IWOFC, IEEE, 14 December 2019 (2019-12-14), pages 1-3, XP033763920, DOI: 10.1109/IWOFC48002.2019.9078446 [retrieved on 2020-04-24] * abstract * * chapter I - II; page 1 - page 2; figures 1-4 * | 13 | |

TECHNICAL FIELDS
SEARCHED (IPC)

G06N
G06F

The present search report has been drawn up for all claims

| Place of search | Date of completion of the search | Examiner |
|---|---|---|
| The Hague | 25 November 2021 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 4394

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2021

| Patent document cited in search report | | Publication date | Patent family member(s) | | Publication date |
|---|---|---|---|---|---|
| CN 108021537 | A | 11-05-2018 | NONE | | |
| US 2020218509 | A1 | 09-07-2020 | CN | 109521994 A | 26-03-2019 |
| | | | EP | 3674883 A1 | 01-07-2020 |
| | | | US | 2020218509 A1 | 09-07-2020 |
| | | | WO | 2019057093 A1 | 28-03-2019 |

EPO FORM P0459

For more details about this annex : see Official Journal of the European Patent Office, No. 12/82